# EUROPEAN PATENT APPLICATION

(11) **EP 1 603 299 A1**
(43) Date of publication of application: **07.12.2005**
(21) Application number: 05011862.9
(22) Date of filing: 01.06.2005
(51) Int. Cl.: H04L 29/06

(54) **Remote control for mobile terminal**

(30) Priority: 02.06.2004 KR 2004040107
(71) Applicant: LG ELECTRONICS INC., Seoul (KR)
(72) Inventor: Lee, Ju-Hyoung, Yongdungpo-Gu, Seoul (KR); Kim, Hyoung-II, Songpa-Gu, Seoul (KR)
(74) Representative: TER MEER - STEINMEISTER & PARTNER GbR

(57) **Abstract**

Remote control for a mobile terminal (200) is provided. A remote control system of a mobile terminal includes a terminal (300) configured to generate a streaming protocol request message (S104) based on a command inputted by a user and to transmit the streaming protocol request message to a mobile terminal (S106). The remote control system also includes the mobile terminal communicatively coupled to the terminal, configured to receive the streaming protocol request message from the terminal, to extract information associated with a keypad input from the streaming protocol request message (S108) and to be controlled by the extracted information associated with a keypad input (S112).

## Description

### BACKGROUND OF THE INVENTION

A mobile communication service provider provide functionality such as a wireless internet connection, a video on demand (VoD) service, a text and multimedia message transmission, and a wireless online gaming. Mobile terminal manufacturers design mobile terminals with functions that are spontaneously performed without being connected to a communication function, such as a camera function, a memo writing function, a schedule managing function, a wake-up call function.

The VoD service provided by the mobile terminal is a service for real-time playing of media content wanted by a user after receiving from a VoD server. The mobile terminal transmits a command for the media content selected by a mobile terminal user (user) to the VoD server, and the VoD server transmits a packet corresponding to the media content selected by the user to the mobile terminal by a streaming method. The packet is transmitted to the mobile terminal by using a real time transport protocol (RTP) and a real time transport control protocol (RTCP). The mobile terminal then plays the received packet. Accordingly, the user is provided with the selected media content. While the media content is being provided, if a simple command such as 'play', 'pause', 'fast forward', or 'rewind' is inputted using a keypad of the mobile terminal, the mobile terminal transmits the command to the VoD server using a real time streaming protocol (RTSP). The user may also input a command by using a keypad mounted in the mobile terminal, or may input a command by using a third device such as a personal computer (PC) or a notebook computer (notebook).

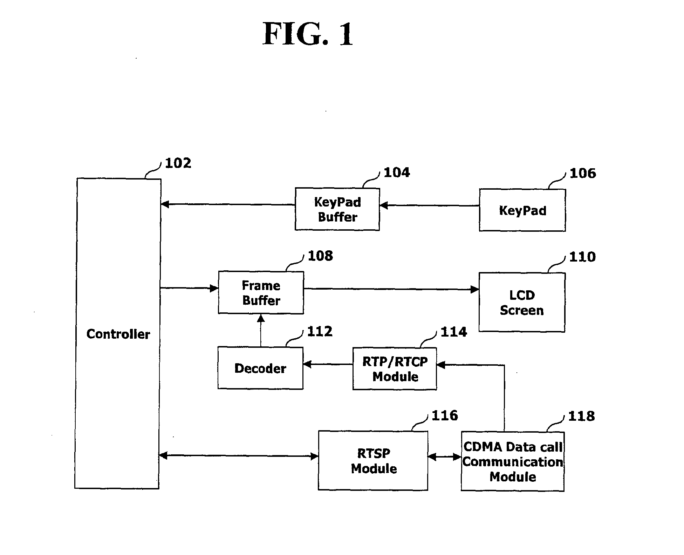

FIG. 1 is a block diagram illustrating an inner construction of a VoD mobile terminal.

Referring to FIG. 1, a VoD terminal 100 comprises a controller 102, a keypad buffer 104, a keypad 106, a frame buffer 108, an LCD screen 110, a decoder 112, an RTP/RTCP module 114, a RTSP module 116, a CDMA data call communication module 118.

When the user wants to receive a VoD service through the mobile terminal, the mobile terminal is connected to a VoD server. If the user selects media content to be service-received, the VoD server transmits a packet corresponding to the selected media content to the mobile terminal using an RTP/RTCP.

The mobile terminal receives the packet transmitted from the VoD server through the CDMA data call communication module 118, and the received packet is inputted to the RTP/RTCP module 114 to be processed for streaming play. The received packet is then inputted to the decoder 112. The decoder 112 releases a compression of the data compression-transmitted from the VoD server, and the data is transmitted to the frame buffer 108 according to a control of the controller 102. The frame buffer 108 buffers the received packet to input to an LCD driver. The LCD driver outputs the inputted data to the LCD screen 110. The LCD screen 110 displays the media content selected by the user. The user may then view the image outputted to the LCD screen 110.

While the user views the selected media content, if a simple command such as 'play', 'pause', 'fast forward', or 'rewind' is inputted using a keypad of the mobile terminal, the inputted command is transmitted to the RTSP module 116 according to a control of the controller 102. The RTSP module encapsulates the received command, and then transmits the command to the VoD server through the CDMA data call communication module 118.

The VoD service using the RTP/RTCP and the RTSP is transmitted to the VoD server from the mobile terminal, and a moving image is transmitted to the mobile terminal from the VoD server.

### SUMMARY OF THE INVENTION

Accordingly, the present invention is directed to remote control for a mobile terminal that substantially obviates one or more problems due to limitations and disadvantages of the related art.

An object of the present invention is to provide a method for developing a mobile terminal into a hub by remotely controlling the mobile terminal by using a RTSP extension method.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in one embodiment, a remote control system of a mobile terminal includes a terminal configured to generate a streaming protocol (such as for example, a real time streaming protocol (RTSP)) request message based on a command inputted by a user and to transmit the RTSP request message to a mobile terminal. The remote control system also includes the mobile terminal communicatively coupled to the terminal, configured to receive the RTSP request message from the terminal. The mobile terminal is also configured to extract information associated with an input from an input device ('information associated with a keypad input' or 'keypad scan code value') from the RTSP request message and to be controlled by the extracted keypad scan code value. The input device may be, for example, a keypad or a mouse.

The terminal may preferably include a user interface configured to generate a keypad scan code value corresponding to the command inputted by the user and a RTSP control module configured to generate the RTSP request message based on the keypad scan code value corresponding to the command inputted by the user. The terminal may also preferably include a communication module configured to transmit the RTSP request message to the mobile terminal. The terminal may preferably be a personal computer (PC) or a notebook computer (notebook).

The mobile terminal may preferably include a communication module configured to receive the RTSP request message and a RTSP control module configured to extract the keypad scan code value from the RTSP request message. The mobile terminal may also preferably include a keypad buffer injection module configured to convert the extracted keypad scan code value into a keypad value of the mobile terminal and to inject the keypad value into a keypad buffer. The mobile terminal may also preferably include a detection module configured to detect image and voice data from a camera and a microphone, respectively, and a controller configured to store the detected image and voice data into a memory and to control the mobile terminal. The mobile terminal may also preferably include a frame buffer capture module configured to stream-capture the stored detected image and voice data.

The RTSP control module may preferably generate a RTSP response message based on the RTSP request message. The RTSP response message may preferably be configured to be transmitted to the terminal through a communication module of the mobile terminal. The keypad buffer may preferably be configured to transmit the keypad scan code value and the keypad value of the mobile terminal to the controller. The detection module may preferably process at least one of image data and voice data.

The RTSP request message may preferably differ based on a difference between a time taken to input the command by the user and a reference time. Furthermore, different RTSP request messages may preferably have a different keypad scan code value. The reference time may preferably be set to the user interface.

The RTSP request message may preferably comprise a push-associated action, generated when a key of a keypad is pressed for a time less than the reference time and is then released. The RTSP request message may also preferably comprise a press-associated action, generated when a key of the keypad is pressed for a time greater than the reference time. The RTSP request message may also preferably comprise a release-associated action, generated when a key of the keypad is pressed for a time greater than the reference time and is then released. The RTSP request message may preferably be configured to be transmitted with a scan code value of a different RTSP request message.

In another embodiment, a method for remotely controlling a mobile terminal includes generating a real time streaming protocol (RTSP) request message based on a command inputted by a user, transmitting the RTSP request message, and receiving the RTSP request message. The method also comprises extracting a keypad scan code value from the received RTSP request message and controlling the mobile terminal based on the extracted keypad scan code value.

The step of transmitting the RTSP request message may preferably include generating a keypad scan code value corresponding to a command inputted by a user and generating a RTSP request message according to the generated keypad scan code value. The step of transmitting the RTSP request message may also preferably include transmitting the generated RTSP request message.

The step of controlling the mobile terminal may preferably include receiving a RTSP request message and extracting a keypad scan code value from the received RTSP request message. The step of controlling the mobile terminal may also preferably include converting the extracted keypad scan code value into a keypad value of the mobile terminal and injecting the keypad value into a keypad buffer.

The step of controlling the mobile terminal comprises may also preferably include detecting image and voice data from a camera and a microphone, respectively, and storing the detected image and voice data. The step of controlling the mobile terminal comprises may also preferably include stream-capturing the stored image and voice data. The step of detecting image and voice data may preferably include photographing image data and recording voice data when a user is in a photographing and recording condition.

The RTSP request message may preferably differ according to a difference between a time taken to input the command by the user and a reference time. Furthermore, different RTSP request messages may preferably have a different keypad scan code value.

In yet another embodiment, a mobile terminal configured to be remote controlled comprises the mobile terminal communicatively coupled to a terminal. The mobile terminal is configured to receive a streaming protocol request message from the terminal and to extract information associated with a keypad input from the streaming protocol request message. The mobile terminal is also configured to be controlled by the extracted information associated with a keypad input. The streaming protocol request message may be generated in the terminal based on a command inputted by a user.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.
FIG. 1 is a block diagram illustrating an inner construction of a VoD mobile terminal.
FIG. 2 is a block diagram illustrating a remote control system for a mobile terminal, according to one embodiment of the present invention.
FIG. 3 is a diagram illustrating a signal flow between a mobile terminal and a terminal, according to one embodiment of the present invention.
FIG. 4 is a diagram illustrating a streaming protocol message format for exchanging an extension header 'Pushed', according to one embodiment of the present invention.
FIG. 5 is a diagram illustrating a streaming protocol message format for exchanging an extension header 'Pressed', according to one embodiment of the present invention.
FIG. 6 is a diagram illustrating a streaming protocol message format for exchanging an extension header 'Released', according to one embodiment of the present invention.
FIG. 7 is a flow diagram illustrating a method for remotely controlling a mobile terminal, according to one embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

In one embodiment, a video on demand (VoD) mobile terminal may be remotely controlled by transmitting data inputted through a keypad of a terminal (third device), such as for example, a personal computer (PC) or a notebook computer (notebook), to the VoD mobile terminal through a streaming protocol. The streaming protocol may be, for example, a real time streaming protocol (RTSP). Hence, although the invention is described with several references to a real time streaming protocol (RTSP), the invention may be used in conjunction with any type of streaming protocol.

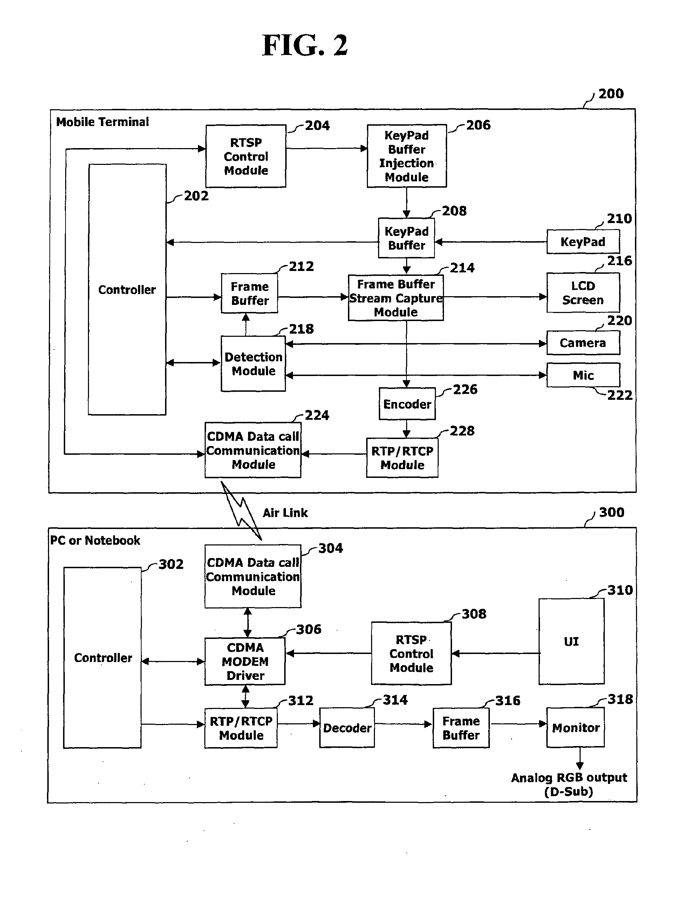

FIG. 2 is a block diagram illustrating a remote control system for a mobile terminal, according to one embodiment of the present invention.

Referring to FIG. 2, a remote control system for a mobile terminal comprises a terminal (third device) 300, such as for example a PC or a notebook, to generate a RTSP request message using information associated with an input from an input device ('information associated with a keypad input' or 'keypad scan code value'). The input device may be, for example, a keypad or a mouse. The keypad scan code value may be generated by input of a key by a user. The RTSP request message may be transmitted to a mobile terminal 200 through a code division multiple access (CDMA) network. The mobile terminal 200 may receive the RTSP request message and may transmit a RTSP response message in a reverse direction. The mobile terminal 200 may also extract the keypad scan code value from the RTSP request message in order to be controlled by the extracted keypad scan code value.

The mobile terminal 200 comprises a controller 202, a RTSP control module 204, a keypad buffer injection module 206, a keypad buffer 208, a frame buffer stream capture module 214, a detection module 218, a camera 220, a microphone 222, an RTP/RTCP module 228, and a CDMA data call communication module 234. RTP is an abbreviation for real time transport protocol.

The terminal 300 comprises a controller 302, a CDMA data call communication module 304, a CDMA modem driver 306, a RTSP control module 308, a user interface 310, an RTP/RTCP module 312, and a monitor 318.

In operation of the remote control system for the mobile terminal 200, the user may take a photograph or record sounds using the camera 220 or the microphone 222, respectively. If image and voice data corresponding to a user preset condition are detected, the detection module 218 may preferably capture data detected according to a control of the controller 202. The captured data may be transmitted to the frame buffer 212. The frame buffer 212 may perform a buffering process, and may transmit the data to the frame buffer stream capture module 214. When the user transmits image and voice data that is stored in a memory of the mobile terminal 200 to the terminal 300, the image and voice data may be transmitted to the frame buffer 212 and also to the frame buffer stream capture module 214.

The frame buffer stream capture module 214 may consecutively capture the image data, and may transmit the image data to a liquid crystal display (LCD) screen 216 of the mobile terminal 200. To transmit the captured image data to the terminal 300, the frame buffer stream capture module 214 may transmit the captured image data to an encoder 226.

The encoder 226 may encode the data received from the frame buffer stream capture module 214, and may transmit the data to the RTP/RTCP module 228. The RTP/RTCP module 228 may encapsulate the received data using the RTP/RTCP, and then may consecutively transmit the data to the terminal 300 through the CDMA data call communication module 224.

The received data transmitted to the terminal 300 through the CDMA data call communication module 224 of the mobile terminal 200 may be consecutively received by the CDMA data call communication module 304 of the terminal 300, and may be transmitted to the CDMA modem driver 306. The CDMA modem driver 306 may demodulate the received data according to a control of the controller 302 of the terminal 300, and may transmit the data to the RTP/RTCP module 312. The RTP/RTCP module 312 may transmit the data received from the CDMA modem driver 306 to a decoder 314. The decoder 314 may preferably decode the received data, and may transmit the received data to a frame buffer 316. The frame buffer 316 may buffer the received data for playing, and may output the received data to the monitor 318. The monitor 318 may output the buffered data as an analogue value of a red, green, and blue (GRB) form.

As the user receives image and voice service from the mobile terminal 200, the user may control the mobile terminal 200 through the terminal 300. To control the mobile terminal 200, the user may preferably input a command through the user interface 310 of the terminal 300. The user interface 310 may be, for example, a keyboard or a mouse. When the command is inputted to the terminal 300, a keypad scan code value corresponding to the inputted command may preferably be generated and the generated keypad scan code value may be transmitted to the RTSP control module 308. The RTSP control module 308 may encapsulate the keypad scan code value, and may generate a RTSP request message. The generated RTSP request message may be transmitted to a TCP/IP protocol stack through a socket I/O. The RTSP request message transmitted to the TCP/IP protocol stack may be transmitted to the CDMA modem driver 306. The CDMA modem driver 306 may demodulate the data received from the RTSP control module 308, and may transmit the received data to the CDMA data call communication module 304. The CDMA data call communication module 304 may transmit the received data to the CDMA data call communication module 224 of the mobile terminal through an air link.

The CDMA data call communication module 224 of the mobile terminal may transmit the data received from the terminal 300 to the RTSP control module 204. The RTSP control module 204 may generate a RTSP response message, and may transmit the RTSP response message in a reverse direction. The RTSP control module 204 may decapsulate the received RTSP request message, and may analyze the RTSP request message to extract a keypad scan code value inputted from the terminal 300. The RTSP control module 204 may then transmit the keypad scan code value, generated from the user interface 310, to the keypad buffer injection module 206. The keypad buffer injection module 206 may preferably convert a command (a keypad scan code value or a menu ID) inputted by the user into a key code value of the mobile terminal 200 to inject to the keypad buffer 208. The keypad buffer 208 may preferably process the command inputted by the user through the terminal 300 in the same manner as the command inputted from the keypad 210 of the mobile terminal. The keypad buffer 208 may then transmit the command inputted by the user through the device to the controller 202. The controller 202 may process the commands received from the keypad buffer 208, and may perform an operation similar to that when the keypad is pressed in the mobile terminal 200.

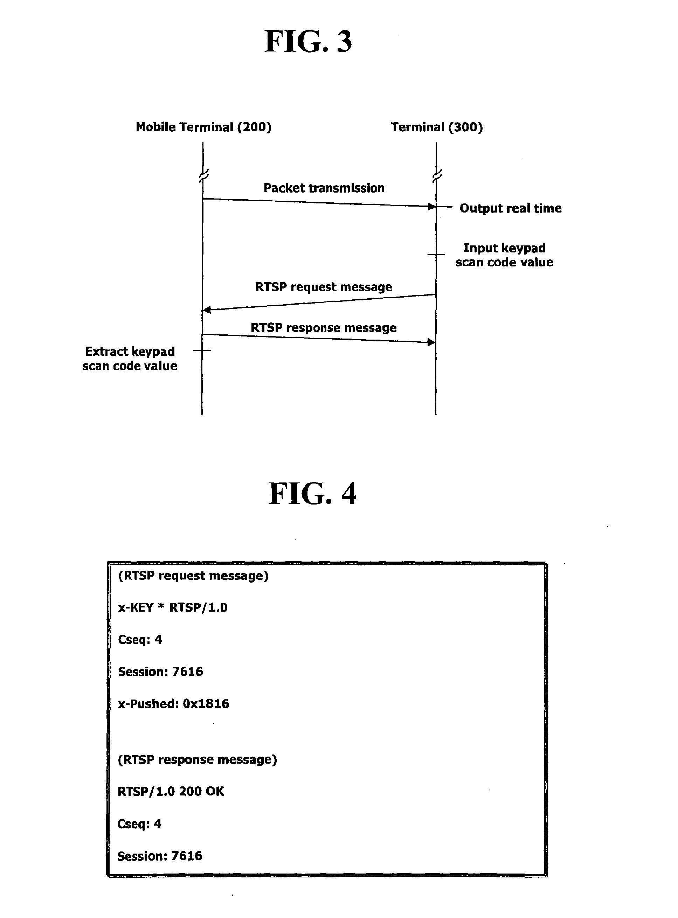

FIG. 3 is a diagram illustrating a signal flow between a mobile terminal and a terminal, according to one embodiment of the present invention.

Referring to FIG. 3, in the remote control system of a mobile terminal according to the present invention, when image data is transmitted to the terminal 300 from the mobile terminal 200 through an RTP/RTCP protocol, the terminal 300 may receive the image data in real time to generate a stream. In one embodiment, when the user is receiving image and voice service outputted from a monitor of the terminal 300, the user may input a keypad scan code value to the terminal 300 through the user interface 310. The terminal 300 may generate a RTSP request message using the inputted keypad scan code value and may transmit the RTSP request message to the mobile terminal 200.

The mobile terminal 200 may receive the RTSP request message and may transmit a RTSP response message to the terminal 300 in a reverse direction. The mobile terminal 200 may also extract the keypad scan code value from the RTSP request message.

A RTSP extension method key for transmitting a keypad scan code value and an extension header included in the RTSP extension method key are defined below with reference to Table 1. The extension header may comprise a push-associated action ('Pushed') when a key of a keypad is pressed for a short time and is then released, a press-associated action ('Pressed') when the key of the keypad is pressed for a long time, and a release associated action ('Released') when the key of the keypad is pressed for a long time and is then released.

**Table 1,**

| below, shows an exemplary extension header. | | |
|---|---|---|
| Header | Where | KEY |
| Cseq | C | M |
| Session | C | M |
| Range | R | C |
| Pushed | R | C |
| Pressed | R | C |
| Released | R | C |

Table 1 is described by the A-BNF format of an IETF RFC 2234 as follows.
- KEYm: = "x-KEY"
- extension-method: = KEYm
- extension-header: = ( Pushed
/ Pressed
/ Released)
- Pushed: = "x-Pushed" HCOLON KeyPad-scan-code
- Pressed: = "x-Pressed" HCOLON KeyPad-scan-code
- Released: = "x-Released" HCOLON KeyPad-scan-code
- KeyPad-scan-code: = hex4

An A-BNF format is used to make an automata table of a parser through a protocol handwriting or an exclusive compiler, and an extension method key may be realized in a protocol parser only if the A-BNF format exists.

FIGs. 4, 5, and 6 show examples of a method key extended by Table 1 and the A-BNF format.

FIG. 4 is a diagram illustrating a streaming protocol message format for exchanging an extension header Pushed, according to one embodiment of the present invention. The Pushed is generated when a key of a keypad on the user interface is pressed for a time less than a preset time and is then released. A keypad scan code value of 16 antilogarithm may preferably be inserted into the extension header Pushed.

In some cases, it may be necessary to press a key for longer than the preset time. Accordingly, pressing a key and releasing a key may be processed using a Pressed and a Released.

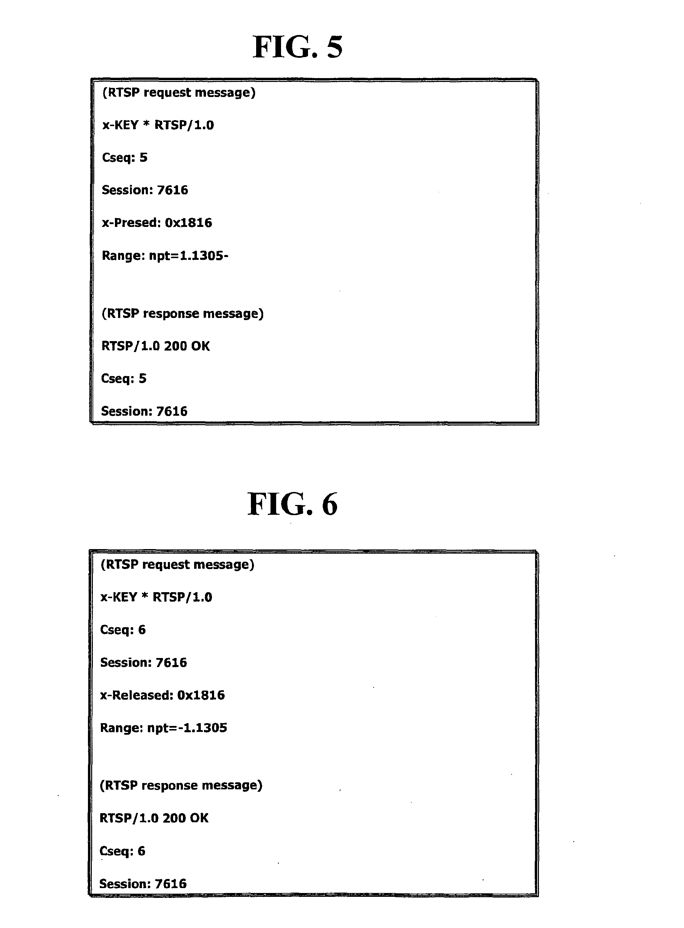

FIG. 5 is a diagram illustrating a streaming protocol message format for exchanging an extension header Pressed, according to one embodiment of the present invention. The Pressed is generated when a key of a keypad on the user interface is pressed for a time longer than a preset time. A keypad scan code value of 16 antilogarithm may preferably be inserted into the extension header Pressed, and the Range may preferably show a time when a key is pressed in an npt form.

FIG. 6 is a diagram illustrating a streaming protocol message format for exchanging an extension header Released, according to one embodiment of the present invention. The Released is generated when a key of a keypad on the user interface is pressed for a time longer than a preset time, and is then released. A keypad scan code value of 16 antilogarithm may preferably be inserted into the extension header Released, and the Range may preferably show a time when a key is pressed and is then released in an npt form.

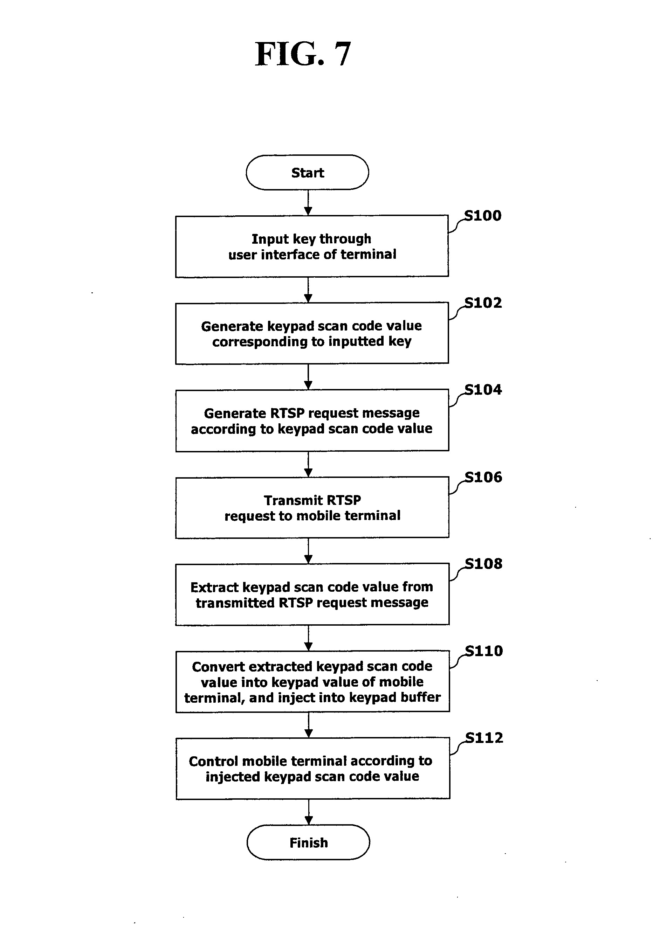

FIG. 7 is a flow diagram illustrating a method for remotely controlling a mobile terminal, according to one embodiment of the present invention.

A mobile terminal may transmit data generated by a camera and a microphone that is stored in a memory to a terminal, such as for example, a PC or a notebook, using an RTP/RTCP. The terminal may receive the data from the mobile terminal and play the received data.

In another embodiment, if the user presses a key of a keypad on a user interface of the terminal, a keypad scan code value corresponding to the pressed key may be generated (S100, S102). The keypad scan code value generated through the user interface may be transmitted to a RTSP control module and the RTSP control module may generate a RTSP request message using the keypad scan code value (S104). The generated RTSP request message may be transmitted to a TCP/IP protocol stack through a socket I/O. The RTSP request message may be transmitted to a CDMA data call communication module of the mobile terminal through the CDMA data call communication module of the terminal (S106). The RTSP request message transmitted to the CDMA data call communication module of the mobile terminal may be transmitted to the RTSP control module. The RTSP control module 204 may generate a RTSP response message, and may transmit the generated RTSP response message in a reverse direction. The RTSP control module may also extract a keypad scan code value from the RTSP request message (S108). The extracted keypad scan code value may be converted into a keypad value of the mobile terminal using a keypad buffer injection module. The keypad scan code value may then be injected into a keypad buffer. The keypad scan code value injected into the keypad buffer may play the same function as a command inputted through the keypad of the mobile terminal. The mobile terminal may then controlled by the keypad value (S112).

In one embodiment, a remote control system of a mobile terminal includes a terminal configured to generate a real time streaming protocol (RTSP) request message based on a command inputted by a user and to transmit the RTSP request message to a mobile terminal. The remote control system also includes the mobile terminal communicatively coupled to the terminal, configured to receive the RTSP request message from the terminal, to extract a keypad scan code value from the RTSP request message and to be controlled by the extracted keypad scan code value.

The terminal may preferably include a user interface configured to generate a keypad scan code value corresponding to the command inputted by the user and a RTSP control module configured to generate the RTSP request message based on the keypad scan code value corresponding to the command inputted by the user. The terminal may also preferably include a communication module configured to transmit the RTSP request message to the mobile terminal. The terminal may preferably be a personal computer (PC) or a notebook computer (notebook).

The mobile terminal may preferably include a communication module configured to receive the RTSP request message and a RTSP control module configured to extract the keypad scan code value from the RTSP request message. The mobile terminal may also preferably include a keypad buffer injection module configured to convert the extracted keypad scan code value into a keypad value of the mobile terminal and to inject the keypad value into a keypad buffer. The mobile terminal may also preferably include a detection module configured to detect image and voice data from a camera and a microphone, respectively, and a controller configured to store the detected image and voice data into a memory and to control the mobile terminal. The mobile terminal may also preferably include a frame buffer capture module configured to stream-capture the stored detected image and voice data.

The RTSP control module may preferably generate a RTSP response message based on the RTSP request message. The RTSP response message may preferably be configured to be transmitted to the terminal through a communication module of the mobile terminal. The keypad buffer may preferably be configured to transmit the keypad scan code value and the keypad value of the mobile terminal to the controller. The detection module may preferably process at least one of image data and voice data.

The RTSP request message may preferably differ based on a difference between a time taken to input the command by the user and a reference time. Furthermore, different RTSP request messages may preferably have a different keypad scan code value. The reference time may preferably be set to the user interface.

The RTSP request message may preferably comprise a push-associated action, generated when a key of a keypad is pressed for a time less than the reference time and is then released. The RTSP request message may also preferably comprise a press-associated action, generated when a key of the keypad is pressed for a time greater than the reference time. The RTSP request message may also preferably comprise a release-associated action, generated when a key of the keypad is pressed for a time greater than the reference time and is then released. The RTSP request message may preferably be configured to be transmitted with a scan code value of a different RTSP request message.

In another embodiment, a method for remotely controlling a mobile terminal includes generating a real time streaming protocol (RTSP) request message based on a command inputted by a user, transmitting the RTSP request message, and receiving the RTSP request message. The method also comprises extracting a keypad scan code value from the received RTSP request message and controlling the mobile terminal based on the extracted keypad scan code value.

The step of transmitting the RTSP request message may preferably include generating a keypad scan code value corresponding to a command inputted by a user and generating a RTSP request message according to the generated keypad scan code value. The step of transmitting the RTSP request message may also preferably include transmitting the generated RTSP request message.

The step of controlling the mobile terminal may preferably include receiving a RTSP request message and extracting a keypad scan code value from the received RTSP request message. The step of controlling the mobile terminal may also preferably include converting the extracted keypad scan code value into a keypad value of the mobile terminal and injecting the keypad value into a keypad buffer.

The step of controlling the mobile terminal comprises may also preferably include detecting image and voice data from a camera and a microphone, respectively, and storing the detected image and voice data. The step of controlling the mobile terminal comprises may also preferably include stream-capturing the stored image and voice data. The step of detecting image and voice data may preferably include photographing image data and recording voice data when a user is in a photographing and recording condition.

The RTSP request message may preferably differ according to a difference between a time taken to input the command by the user and a reference time. Furthermore, different RTSP request messages may preferably have a different keypad scan code value.

In remotely controlling a mobile terminal according to the present invention, the mobile terminal may provide data to the terminal, such as a PC or a notebook, having image and voice interfaces through a RTP/RTSP. The user may then see and hear the image and voice data of the mobile terminal in real time by remote control.

Since the mobile terminal receives a command from the terminal through a RTSP, the user may remotely control the mobile terminal. The present invention may be used in conjunction with a remote monitoring closed circuit camera or a camera phone, for example. Furthermore, since the mobile terminal may exchange an image and a keypad input with the terminal, the mobile terminal may be developed into a multimedia hub.

Additionally, in the present invention, a game operated on the mobile terminal may be outputted to a large TV screen through a component terminal, an RCA terminal and/or an S-Video terminal, so that the mobile terminal may be used for a home gaming. The present invention may also be used in conjunction with a VCR or a DVD player to output a moving image received by a VoD mobile terminal to a high resolution monitor through a DVI terminal or a D-Sub terminal.

It will be apparent to those skilled in the art that various modifications and variations may be made in the present invention without departing from the spirit or scope of the inventions. Thus, it is intended that the present invention covers the modifications and variations of this invention provided they come within the scope of the appended claims and their equivalents.

## Claims

1. A remote control system of a mobile terminal, comprising:
a terminal configured to generate a streaming protocol request message based on a command inputted by a user and to transmit the streaming protocol request message to a mobile terminal; and
the mobile terminal communicatively coupled to the terminal, configured to receive the streaming protocol request message from the terminal, to extract information associated with a keypad input from the streaming protocol request message and to be controlled by the extracted information associated with a keypad input.

2. The remote control system of claim 1, wherein the terminal comprises:
a user interface configured to generate information associated with a keypad input corresponding to the command inputted by the user;
a streaming protocol control module configured to generate the streaming protocol request message based on the information associated with a keypad input corresponding to the command inputted by the user; and
a communication module configured to transmit the streaming protocol request message to the mobile terminal.

3. The remote control system of claim 1, wherein the mobile terminal comprises:
a communication module configured to receive the streaming protocol request message;
a streaming protocol control module configured to extract the information associated with a keypad input from the streaming protocol request message; and
a keypad buffer injection module configured to convert the extracted information associated with a keypad input into a keypad value of the mobile terminal and to inject the keypad value into a keypad buffer.

4. The remote control system of claim 1, wherein the mobile terminal comprises:
a detection module configured to detect image and voice data from a camera and a microphone, respectively;
a controller configured to store the detected image and voice data into a memory and to control the mobile terminal; and
a frame buffer capture module configured to stream-capture the stored detected image and voice data.

5. The remote control system of claim 3, wherein the streaming protocol control module generates a streaming protocol response message based on the streaming protocol request message.

6. The remote control system of claim 5, wherein the streaming protocol response message is configured to be transmitted to the terminal through a communication module of the mobile terminal.

7. The remote control system of claim 3, wherein the keypad buffer is configured to transmit the information associated with a keypad input and the keypad value of the mobile terminal to the controller.

8. The remote control system of claim 4, wherein the detection module processes at least one of image data and voice data.

9. The remote control system of claim 2, wherein the streaming protocol request message differs based on a difference between a time taken to input the command by the user and a reference time.

10. The remote control system of claim 9, wherein different streaming protocol request messages have different information associated with a keypad input.

11. The remote control system of claim 9, wherein the reference time is set to the user interface.

12. The remote control system of claim 9, wherein the streaming protocol request message comprises a push-associated action, generated when a key of a keypad is pressed for a time less than the reference time and is then released.

13. The remote control system of claim 9, wherein the streaming protocol request message comprises a press-associated action, generated when a key of the keypad is pressed for a time greater than the reference time.

14. The remote control system of claim 9, wherein the streaming protocol request message comprises a release-associated action, generated when a key of the keypad is pressed for a time greater than the reference time and is then released.

15. The remote control system of claim 1, wherein the terminal is a personal computer (PC) or a notebook computer (notebook).

16. The remote control system of claim 9, wherein the streaming protocol request message is configured to be transmitted with a scan code value of a different streaming protocol request message.

17. The remote control system of claim 1, wherein the streaming protocol is a real time streaming protocol (RTSP).

18. A method for remotely controlling a mobile terminal, comprising:
generating a streaming protocol request message based on a command inputted by a user;
transmitting the streaming protocol request message;
receiving the streaming protocol request message;
extracting information associated with a keypad input from the received streaming protocol request message; and
controlling the mobile terminal based on the extracted information associated with a keypad input.

19. The method of claim 18, wherein the step of transmitting the streaming protocol request message comprises:
generating information associated with a keypad input corresponding to a command inputted by a user;
generating a streaming protocol request message according to the generated information associated with a keypad input; and
transmitting the generated streaming protocol request message.

20. The method of claim 18, wherein the step of controlling the mobile terminal comprises:
receiving a streaming protocol request message;
extracting information associated with a keypad input from the received streaming protocol request message;
converting the extracted information associated with a keypad input into a keypad value of the mobile terminal; and
injecting the keypad value into a keypad buffer.

21. The method of claim 18, wherein the step of controlling the mobile terminal comprises:
detecting image and voice data from a camera and a microphone, respectively;
storing the detected image and voice data; and
stream-capturing the stored image and voice data.

22. The method of claim 18, wherein the step of detecting image and voice data comprises photographing image data and recording voice data when a user is in a photographing and recording condition.

23. The method of claim 18, wherein the streaming protocol request message differs according to a difference between a time taken to input the command by the user and a reference time.

24. The method of claim 23, wherein different streaming protocol request messages have different information associated with a keypad input.

25. The method of claim 23, wherein the streaming protocol request message comprises a push-associated action, generated when a key of a keypad is pressed for a time less than the reference time and is then released.

26. The method of claim 23, wherein the streaming protocol request message comprises a press-associated action, generated when a key of a keypad is pressed for a time greater than the reference time.

27. The method of claim 23, wherein the streaming protocol request message comprises a release-associated action, generated when a key of a keypad is pressed for a time more than the reference time and is then released.

28. The method of claim 23, wherein the streaming protocol request message is transmitted with a scan code value of a different streaming protocol request message.

29. The method of claim 18, wherein the streaming protocol is a real time streaming protocol (RTSP).

30. A mobile terminal configured to be remote controlled, comprising:
the mobile terminal communicatively coupled to a terminal, configured to receive a streaming protocol request message from the terminal, to extract information associated with a keypad input from the streaming protocol request message and to be controlled by the extracted information associated with a keypad input, wherein the streaming protocol request message is generated in the terminal based on a command inputted by a user.

31. The mobile terminal of claim 30, wherein the mobile terminal comprises:
a communication module configured to receive the streaming protocol request message;
a streaming protocol control module configured to extract the information associated with a keypad input from the streaming protocol request message; and
a keypad buffer injection module configured to convert the extracted information associated with a keypad input into a keypad value of the mobile terminal and to inject the keypad value into a keypad buffer.

32. The mobile terminal of claim 30, wherein the mobile terminal comprises:
a detection module configured to detect image and voice data from a camera and a microphone, respectively;
a controller configured to store the detected image and voice data into a memory and to control the mobile terminal; and
a frame buffer capture module configured to stream-capture the stored detected image and voice data.
